(19) Europäisches Patentamt
European Patent Office
Office européen des brevets

(11) **EP 3 032 717 A1**

(12) **EUROPEAN PATENT APPLICATION**
published in accordance with Art. 153(4) EPC

(43) Date of publication:
**15.06.2016 Bulletin 2016/24**

(21) Application number: **14833881.7**

(22) Date of filing: **01.08.2014**

(51) Int Cl.:
**H02K 21/16** (2006.01)

(86) International application number:
**PCT/JP2014/070311**

(87) International publication number:
**WO 2015/019948 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.08.2013 JP 2013161967**

(71) Applicant: **Mitsuba Corporation**
**Kiryu-shi, Gunma 376-8555 (JP)**

(72) Inventors:
• **OKUBO Masayuki**
 **Kiryu-shi**
 **Gunma 376-8555 (JP)**

• **OGIHARA Shigeru**
 **Kiryu-shi**
 **Gunma 376-8555 (JP)**
• **UCHIDATE Takahiro**
 **Kiryu-shi**
 **Gunma 376-8555 (JP)**

(74) Representative: **Hoffmann Eitle**
**Patent- und Rechtsanwälte PartmbB**
**Arabellastraße 30**
**81925 München (DE)**

(54) **BRUSHLESS MOTOR**

(57)    A brushless motor (1) includes a stator (2) including a stator core (5) formed by laminating a plurality of stator core plates (17), and a rotor (3) including a rotor core (15) formed by laminating a plurality of rotor core plates (18). The rotor core (15) includes a core body (15a), a magnet mounting hole (31) in which a magnet (16) is housed, and a salient pole portion (32) formed on an outer peripheral side of the magnet (16). An axial direction length Lr of the rotor core (15) is longer than an axial direction length Lm of the magnet (16) (Lr>Lm). A first overhang portion (41) is formed on both end portions of the rotor core (15). An axial direction length Ls of the stator core (5) is longer than the axial direction length Lr of the rotor core (15) (Ls>Lr). A second overhang portion (42) is formed on both end portions of the stator core (5).

[Fig. 3]

## Description

## Technical Field

The present invention relates to a technology for reducing cogging of a brushless motor, in particular, reducing cogging of a magnet-embedded brushless motor (interior permanent magnet motor (IPM motor)).

## Background Art

In recent years, uses of a magnet-embedded brushless motor (IPM motor) configured to rotate a rotor utilizing both magnetic torque from the magnetic force of a magnet embedded in the rotor and reluctance torque from the magnetization of the rotor have been expanding. IPM motors utilize reluctance torque in addition to magnetic torque, and hence are a highly efficient and high-torque motor. In addition to being used as a drive source for an electric power steering apparatus for a vehicle, IPM motors are increasingly being used in hybrid vehicles, air conditioning apparatus, and the like.

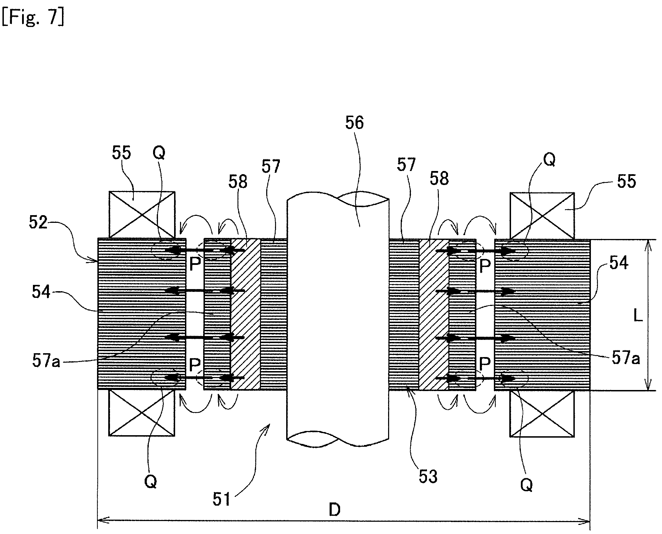

FIG. 7 is an explanatory diagram for illustrating a configuration of an IPM motor. As illustrated in FIG. 7, an IPM motor 51 includes, similarly to a general electric motor, a stator 52 on an outer side thereof and a rotor 53 on an inner side thereof. The stator 52 includes a stator core 54 formed by laminating a large number of layers of a thin steel sheet material and a coil 55 wound around a tooth (not shown) of the stator core 54. The rotor 53 includes a rotor core 57 fixed to a shaft 56 and a magnet 58 embedded in the rotor core 57. In the IPM motor 51, a rotor core peripheral portion 57a, which is located on an outer side of the magnet 58, also acts as a pseudo magnetic pole. The IPM motor 51 causes the rotor 53 to rotate by utilizing both magnetic torque and reluctance torque.

## Citation List

## Patent Literature

Patent Literature 1: JP 2008-160931 A
Patent Literature 2: JP 2010-51150 A

## Summary of Invention

## Technical Problem

In the IPM motor, as can also be seen from FIG. 7, the rotor core peripheral portion 57a formed of a magnetic body is interposed between the magnet 58 and the stator 52. Magnetic flux tends to concentrate between the magnet 58 and the rotor core peripheral portion 57a (section P of FIG. 7) due to three-dimensional magnetic flux leakage from the magnet end surfaces, which produces unevenness in the level of the magnetic flux density in an axial direction. A magnetic flux concentrated section (section Q of FIG. 7) is also produced between the rotor 53 and the stator 52 at the end portions of the rotor 53 and the stator 52, and hence the unevenness in magnetic flux density in the axial direction is increased further. As a result, cogging during rotation of the rotor increases. In particular, for a flat IPM motor in which a ratio D/L of a stator core outer diameter D to a stator core length L is greater than 1, for example, the axial lengths of the rotor core, the magnet, and the stator are shorter, and hence the amount of magnetic flux flowing around to the end portions in the axial direction of the rotor core and the end portions in the axial direction of the stator increases. As a result, there has been a problem in that significant unevenness occurs in the magnetic flux density in the axial direction.

## Solution to Problem

According to the present invention, there is provided a brushless motor, including: a stator including a stator core formed of a magnetic material; and a rotor which is rotatably arranged on an inner side of the stator, the rotor including a rotor core formed of a magnetic material and a plurality of magnets fixed in the rotor core, the rotor core including: a core body fixed to a rotor shaft; and a plurality of magnet mounting portions which are arranged at regular intervals in a circumferential direction of the core body and in which the magnets are accommodated, an axial direction length Lr of the rotor core being longer than an axial direction length Lm of the magnets (Lr>Lm), and an axial direction length Ls of the stator core being longer than the axial direction length Lr of the rotor core (Ls>Lr).

In the brushless motor, the rotor core may have a first overhang portion formed on both end portions of the rotor core, the first overhang portion being free from facing the magnets and overhanging in an axial direction from end portions in the axial direction of the magnets, and the stator core may have a second overhang portion formed on both end portions of the stator core, the second overhang portion being free from facing the rotor core and overhanging in an axial direction from end portions in an axial direction of the rotor core. The first overhang portion is configured to equalize the magnetic flux density in the rotor core by suppressing magnetic flux flowing into the rotor core from the end surfaces of the magnet in the axial direction. The second overhang portion is configured to equalize the magnetic flux density in the stator core by suppressing magnetic flux flowing into the stator core from the end surfaces of the rotor core in the axial direction.

Further, a length X1 in an axial direction of the first overhang portion and a length X2 in an axial direction of the second overhang portion may be set to be more than 0 mm to 1.0 mm or less. The length X1 in the axial direction of the first overhang portion and the length X2 in the axial direction of the second overhang portion may be set to be equal (X1=X2).

Further, the rotor core may be formed by laminating a plurality of rotor core plates formed of a thin steel sheet, and the axial direction length Lr of the rotor core may be set to be longer than the axial direction length Lm of the magnets by a thickness tr of the rotor core plates multiplied by n, where n is a natural number (Lr=Lm+tr×n). Further, the stator core may be formed by laminating a plurality of stator core plates formed of a thin steel sheet, and the axial direction length Ls of the stator core may be set to be longer than the axial direction length Lr of the rotor core by a thickness ts of the stator core plates multiplied by n, where n is a natural number (Ls=Lr+tsxn). Further, the thickness tr of the rotor core plates and the thickness ts of the stator core plates may be set to be equal (tr=ts). In addition, the rotor core may include a plurality of salient pole portions which are formed on an outer peripheral side of the magnet mounting portions and which are arranged on an outer peripheral portion of the rotor.

**Advantageous Effects of Invention**

In the brushless motor according to the present invention, the rotor core is used that has the configuration including the core body fixed to the rotor shaft and the magnet mounting portions arranged on the core body. Further, the magnetic flux density in the rotor core and the magnetic flux density in the stator core can be equalized by setting the axial direction length Lr of the rotor core to be longer than the axial direction length Lm of the magnets (Lr>Lm), and setting the axial direction length Ls of the stator core to be longer than the axial direction length Lr of the rotor core (Ls>Lr). As a result, cogging caused by bias in the magnetic flux density can be reduced.

**Brief Description of Drawings**

FIG. 1 is a cross-sectional view of a brushless motor according to an embodiment of the present invention.
FIG. 2 is a cross-sectional view taken along the line A-A of FIG. 1.
FIG. 3 is an explanatory diagram for illustrating a relationship among the axial direction lengths of a magnet, a rotor core, and a stator core.
FIG. 4 is an explanatory diagram for showing a relationship among an overhang amount X1 of the rotor core with respect to the magnet, a cogging torque, and an output torque.
FIG. 5 is an explanatory diagram for showing a relationship among an overhang amount X2 of the stator core with respect to the rotor core, a cogging torque, and an output torque.
FIGS. 6 are explanatory diagrams for illustrating examples of other IPM motors to which the present invention may be applied.
FIG. 7 is an explanatory diagram for illustrating a configuration of an IPM motor.

**Description of Embodiments**

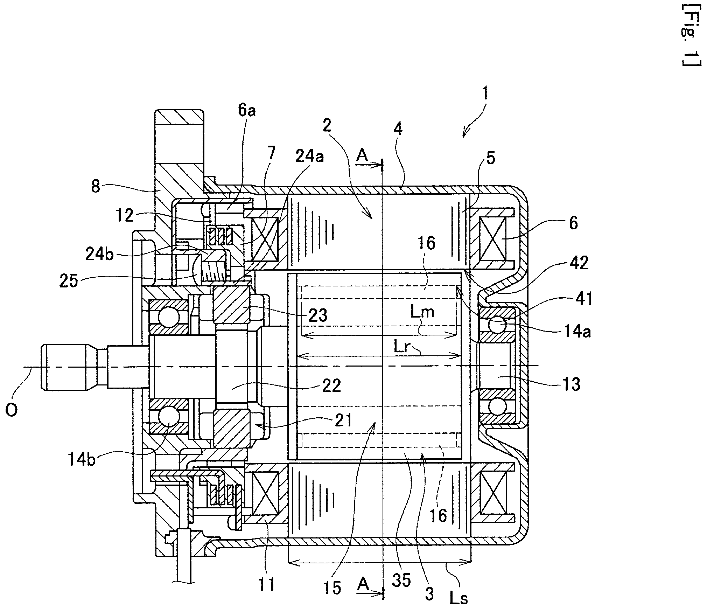

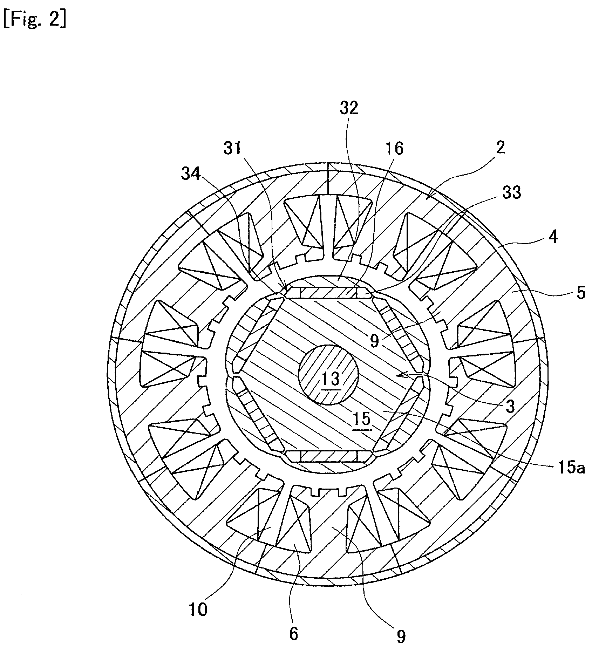

An embodiment of the present invention is now described in more detail with reference to the drawings. It is an object of this embodiment to reduce, in a so-called IPM motor having a configuration in which magnets are embedded in a rotor, cogging by equalizing magnetic flux density in the axial direction. FIG. 1 is a cross-sectional view of a brushless motor 1 (hereinafter abbreviated as "motor 1") according to the embodiment of the present invention. FIG. 2 is a cross-sectional view taken along the line A-A of FIG. 1. The motor 1 is an IPM brushless motor configured to rotate a rotor by reluctance torque that is based on an inductance difference and magnetic torque from the magnetic force of a magnet. As illustrated in FIG. 1, the motor 1 is an inner rotor brushless motor including a stator 2 on an outer side thereof and a rotor 3 on an inner side thereof. The motor 1, which is a flat IPM motor in which D/L>1, is used as a drive source for an electric power steering apparatus.

The stator 2 is fixed to an inner side of a cylindrical motor case 4 (hereinafter abbreviated as "case 4") having a bottom. The stator 2 is constructed from a stator core 5, a stator coil 6 (hereinafter abbreviated as "coil 6"), and a bus bar unit (terminal unit) 7. The coil 6 is wound around a plurality of tooth portions 9 of the stator core 5 via an insulator 11. The bus bar unit 7 is mounted to the stator core 5, and is electrically connected to the coil 6. In this embodiment, there are nine tooth portions 9. The coil 6 is arranged in nine slots formed between adjacent tooth portions 9. The case 4 is formed of iron and the like, and has a cylindrical shape with a bottom. A bracket 8 made of die-cast aluminum is mounted to an opening of the case 4 by a fixing screw (not shown).

The stator core 5 is formed by laminating a large number of layers of a stator core plate 17, which is a thin sheet material made of steel (e.g., a magnetic steel sheet having a thickness ts of 0.5 mm). On the stator core 5, a plurality of the tooth portions 9 protrude toward an inner side in the radial direction. A slot 10 is formed between adjacent tooth portions 9. The coil 6 is accommodated in the slot 10. The insulator 11, which is made of a synthetic resin, is mounted to the stator core 5. The coil 6 is wound around an outer side of the insulator 11. The bus bar unit 7, which is positioned by the insulator 11, is mounted to one end side in the axial direction of the stator core 5. The bus bar unit 7 is constructed from a body portion made of a synthetic resin and a copper bus bar, which is insert-molded in the body portion.

Around the bus bar unit 7, a plurality of connection terminals 12 are arranged so as to protrude in the axial direction. During mounting of the bus bar unit 7, the connection terminals 12 are welded to a terminal portion 6a of each coil 6 drawn from the stator core 5. The number of bus bars arranged in the bus bar unit 7 corresponds to the number of phases of the motor 1 (in this case, there is a total of four bus bars: three bus bars for a U-phase, a V-phase, and a W-phase, and one bus bar for connecting each of the phases to each other). Each coil 6 is electrically connected to the connection terminal 12 corresponding to its phase. After the bus bar unit 7 has been mounted to the stator core 5, the stator core 5 is press-fitted into the case 4 or is fixed in the case 4 by fixing means, such as an adhesive.

The rotor 3 is inserted into an inner side of the stator 2 in a concentric manner with the stator 2. The rotor 3 includes a rotor shaft 13. The rotor shaft 13 is rotatably axially supported by bearings 14a and 14b. The bearing 14a is fixed to a center of a bottom portion of the case 4. The bearing 14b is fixed to a center portion of the bracket 8. A cylindrical rotor core 15 and a rotor (resolver rotor) 22 of a resolver 21, which is rotation angle detection means, are mounted to the rotor shaft 13. A stator (resolver stator) 23 of the resolver 21 is housed in a resolver holder 24a. The resolver holder 24a is fixed to an inner side of the bracket 8 by a mounting screw 25 via a resolver bracket 24b made of a synthetic resin.

The stator core 15 is also formed by laminating a large number of layers of a rotor core plate 18, which is a thin sheet material made of steel (e.g., a magnetic steel sheet having a thickness tr of 0.5 mm). A plurality of magnet mounting holes (magnet mounting portions) 31 are arranged on a peripheral portion of the rotor core 15 in a circumferential direction. The magnet mounting holes 31 pass through the rotor core 15 in the axial direction. A magnet 16 is accommodated and fixed in each magnet mounting hole 31. A salient pole portion 32 is formed an outer peripheral side of each magnet 16. Six magnets 16 are arranged in the circumferential direction, and hence the motor 1 has a six-pole and nine-slot configuration. A gap portion 33 is formed in the magnet mounting holes 31. The gap portion 33, which is formed on both sides in the circumferential direction of the magnets 16, functions as a flux barrier that magnetic flux does not pass through easily. A bridge portion 34 for coupling a core body 15a and the salient pole portion 32 is arranged between adjacent salient pole portions 32.

In this embodiment, as described above, the stator core plates 17 of the stator core 5 and the rotor core plates 18 of the rotor core 15 are both formed by laminating magnetic steel sheets having a thickness of 0.5 mm. Therefore, the plates 17 and 18 may both be press-molded by a common mold from the same blank material to have substantially uniform properties, such as magnetic properties.

In this case, with a related-art IPM brushless motor, as described above, there is a problem in that a magnetic body may be interposed between the magnet and the stator, which can cause increased cogging due to magnetic flux flowing around from the end surfaces in the axial direction. Therefore, for the motor 1, in order to suppress magnetic flux from flowing around from the end surface sides in the axial direction, the axial direction length of the rotor core 15 is set to be longer than the axial direction length of the magnets 16, and the axial direction length of the stator core 5 is set to be longer than the axial direction length of the rotor core 15 (magnet length<rotor core length<stator core length). Note that, the axial direction of the rotor core 15 means that, at least, the axial direction length of the salient pole portion 32 located on the outer side of the magnets 16 is longer than the magnets 16. In other words, in the rotor core 15, the axial direction length of the core body 15a located on the side nearer the inner periphery than the magnets 16 is not necessarily longer than the magnets 16. Therefore, for example, in order to reduce weight and inertia, the core body 15a on the inner side from the magnets 16 may be shortened by cutting or the like.

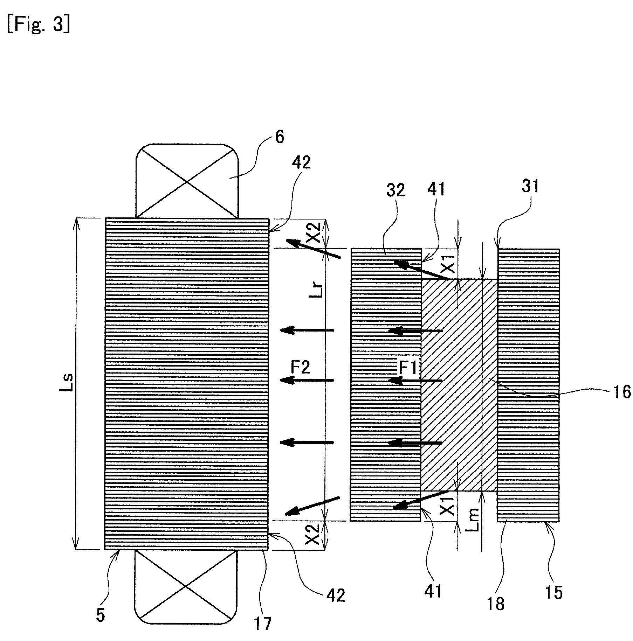

FIG. 3 is an explanatory diagram for illustrating a relationship among the axial direction lengths in the motor 1 of the magnets 16, the rotor core 15, and the stator core 5. Note that, in FIG. 3, in order to clarify the feature of the present invention, the dimensional relationship is exaggerated. As illustrated in FIG. 3, an axial direction length Lr of the rotor core 15 is longer than an axial direction length Lm of the magnets 16 (Lr>Lm). An axial direction length Ls of the stator core 5 is longer than the axial direction length Lr of the rotor core 15 (Ls>Lr). A first overhang portion 41 (overhang amount X1) not facing the magnets 16 is formed on both end portions of the rotor core 15. A second overhang portion 42 (overhang amount X2) not facing the rotor core 15 is also formed on both end portions of the stator core 5. The overhang portions 41 and 42 are not arranged on just the end portion on one side in the axial direction of the rotor core 15 and the stator core 5. Instead, the overhang portions 41 and 42 are evenly arranged on the end portions in the axial direction.

A difference between Lr and Lm is set to be larger than the minimum value of the difference between Lr and Lm that takes into consideration the dimensional tolerances of Lr and Lm. A difference between Ls and Lr is also set to be larger than the minimum value of the difference between Ls and Lr that takes into consideration the dimensional tolerances of Ls and Lr. Therefore, the overhang portions 41 and 42 are still formed even when the axial direction lengths of the parts are uneven and the tolerances of those parts are added up. The overhang amounts X1 and X2 of the overhang portions 41 and 42 may be suitably adjusted by changing the thickness and the number of laminated layers of the thin sheet material forming the stator core 5 and the rotor core 15. Almost all of the magnetic flux flowing around from the end portions of the magnets 16 to the end portions of the rotor core 15 is eliminated by arranging the overhang portion 41. As indicated by the arrows F1 of FIG. 3, the magnetic flux from the magnet 16 flows to the inner surface side of the salient pole portion 32. As a result, even at the end portions in the axial direction of the magnets 16, the magnetic flux from the magnets 16 flows to the overhang portion 41, which is a surface on the inner side of the salient pole portion 32. Between the rotor core 15 and the stator core 5 as well, almost all of the magnetic flux flowing around from the end portions of the rotor core 15 to the end portions of the stator core 5 is eliminated by the overhang portion 42. As indicated by the arrows F2 of FIG. 3, the magnetic flux from the rotor core 15 flows to the inner surface side of the stator core 5. As a result, even at the end portions of the salient pole portion 32 in the axial direction, the magnetic flux from the rotor core 15 flows to the overhang portion 42, which is a surface on the inner side of the stator core 5.

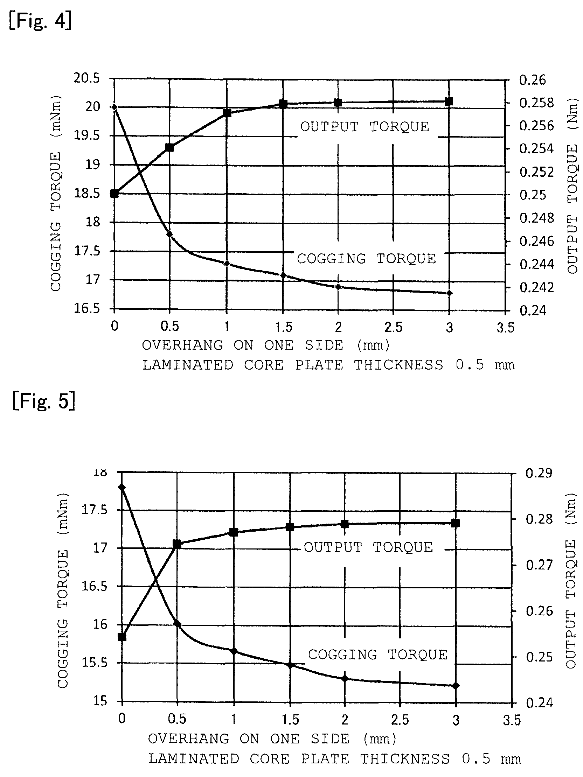

Regarding the overhang portion 41 arranged between the magnets 16 and the rotor core 15, looking at the overhang amount X1 and the effect of reduced cogging, in an experiment carried out by the inventors of the present invention, a result such as that shown in FIG. 4 was obtained. FIG. 4 is an explanatory diagram for showing a relationship in the motor 1 among the overhang amount X1 (overhang amount on one side), a cogging torque, and an output torque. As shown in FIG. 4, cogging suddenly decreases when the overhang portion 41 is arranged. Cogging is significantly reduced until the overhang amount X1 is 0.5 mm to 1 mm (about the thickness tr of the rotor core plate 18 to about two times the thickness tr of the rotor core plate 18). When the overhang amount X1 exceeds 1 mm, the reduction in cogging decreases, and remains almost level thereafter. The output torque gradually increases until the overhang amount X1 is about 1 mm, and remains almost level thereafter. When the length of the overhang amount X1 is increased, the size of the motor increases. Therefore, from the perspective of reducing the size and weight of the motor, it is preferred that X1 be as small a value as possible. Thus, considering the effects of the overhang portion 41, as can be seen from FIG. 4, it is preferred that the overhang amount X1 be up to about 1 mm.

Next, regarding the overhang portion 42 arranged between the rotor core 15 and the stator core 5, looking at the overhang amount X2 and the effect of reduced cogging, in an experiment carried out by the inventors of the present invention, a result such as that shown in FIG. 5 was obtained. FIG. 5 is an explanatory diagram for showing a relationship in the motor 1 among the overhang amount X2 (overhang amount on one side), a cogging torque, and an output torque. Also in the case of FIG. 5, a tendency similar to that of FIG. 4 was observed, and cogging suddenly decreases when the overhang portion 42 is arranged. Cogging is significantly reduced until the overhang amount X2 is 0.5 mm to 1 mm (about the thickness ts of the stator core plate 17 to about two times the thickness ts of the stator core plate 17: ts=tr in this embodiment). When the overhang amount X2 exceeds 1 mm, the reduction in cogging decreases, and remains almost level thereafter. The output torque gradually increases until the overhang amount X2 is about 1 mm, and remains almost level thereafter. When the length of the overhang amount X2 is increased, the size of the motor increases. Therefore, similarly to the above-mentioned case, it is preferred that X2 be as small a value as possible. Thus, considering the effects of the overhang portion 42, as can be seen from FIG. 5, it is preferred that the overhang amount X2 be up to about 1 mm.

Based on the results obtained in FIG. 4 and FIG. 5, it is preferred that the overhang amounts X1 and X2 both be up to about 1 mm. Therefore, it is preferred that the dimensional relationship between the magnets 16 and the rotor core 15 and the dimensional relationship between the rotor core 15 and the stator core 5 be set as follows.

```
Magnet length<rotor core length [=magnet length+(more than 0 mm to 1 mm or less)×2]
```

```
Rotor core length<stator core length [=rotor core
length+(more than 0 mm to 1 mm or less)×2]
```

When a double overhang structure in accordance with those dimensional relationships is employed, due to the action of the overhang portion 41 and the overhang portion 42, the flow of magnetic flux from the axial direction at both end portions of the rotor core 15 and the stator core 5 is suppressed. Further, the flow of magnetic flux from the magnets 16 to the rotor core 15 and the flow of magnetic flux from the rotor core 15 to the stator core 5 are equalized in the axial direction. As a result, the magnetic flux density in the axial direction is equalized, and cogging caused by bias in the magnetic flux density is reduced.

According to an experiment by the inventors of the present invention, although cogging was improved even when the overhang amount X1 was 0 and the only the overhang amount X2 was set, the output torque decreased. Therefore, in order to increase the torque, it is preferred that both X1 and X2 be set. Further, when only X1 is set and X2 is 0 or a negative value (the stator core 5 is shorter than the rotor core 15), cogging actually increases.

Thus, with the IPM motor according to the present invention, cogging torque can be reduced by just changing the axial direction dimension of the rotor core 15 and the stator core 5, without greatly increasing the size of the motor. As a result, even in a flat IPM motor in which D/L>1, cogging can be reduced easily and effectively. Further, the setting of the overhang portion 41 and the overhang portion 42 can also be easily adjusted by changing the thickness or the number of laminated stator core plates 17 and rotor core plates 18. Therefore, the motor properties can be easily improved without significantly changing the related-art configuration.

The present invention is not limited to the above-mentioned embodiment, and naturally various modifications may be made to the present invention without departing from the spirit and scope thereof.

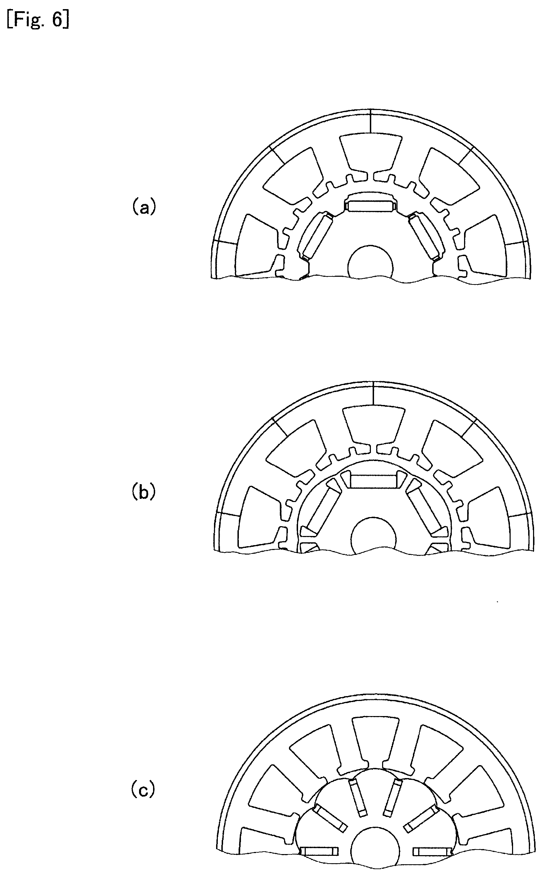

For example, in the embodiment described above, an example is described in which the present invention is applied to a mode such as that illustrated in FIG. 2 as an IPM motor. However, the present invention may be applied to any magnet-embedded motor. For example, the present invention may also be applied to IPM motors such as those illustrated in FIG. 6(a) to FIG. 6(c). Further, in the embodiment described above, an example is described in which the thickness of the stator core plates 17 and the thickness of the rotor core plates 18 are both 0.5 mm. However, the thickness of those plates is not limited to 0.5 mm. In addition, the thickness of the stator core plates 17 and the thickness of the rotor core plates 18 do not need to be the same. It is preferred that the overhang amounts X1 and X2 be about the same to about two times the thickness of the rotor core plates 18.

In the embodiment described above, as a preferred setting example of the overhang amount X1 of the overhang portion 41 arranged between the magnets 16 and the rotor core 15, an example is described in which magnet length<rotor core length [=magnet length+(more than 0 mm to 1 mm or less)x2]. However, because the magnets 16 are a molded article formed in advance, the axial direction length of the rotor core 15 may be set at the molding stage of the magnets 16. In this case, the dimensional relationship of the double overhang structure is magnet length [=rotor core length-(more than 0 mm to 1 mm or less)×2]<rotor core length.

**Industrial Applicability**

In addition to being used as a drive source for an electric power steering apparatus, the present invention can be widely applied in other in-vehicle electric apparatus, hybrid vehicles, electric vehicles, and electrical products such as an air conditioning apparatus.

**Reference Signs List**

1    brushless motor

2         stator
3         rotor
4         motor case
5         stator core
6         stator coil
6a       terminal portion
7         bus bar unit
8         bracket

| 9 | tooth portion |
|---|---|
| 10 | slot |
| 11 | insulator |
| 12 | connection terminal |
| 13 | rotor shaft |
| 14a, 14b | bearing |
| 15 | rotor core |
| 15a | core body |
| 16 | magnet |
| 17 | stator core plate |
| 18 | rotor core plate |
| 21 | resolver |
| 22 | resolver rotor |
| 23 | resolver stator |
| 24a | resolver holder |
| 24b | resolver bracket |
| 25 | mounting screw |
| 31 | magnet mounting hole (magnet mounting portion) |
| 32 | salient pole portion |
| 33 | gap portion |
| 34 | bridge portion |
| 41 | first overhang portion |
| 42 | second overhang portion |
| 51 | IPM motor |
| 52 | stator |
| 53 | rotor |
| 54 | stator core |
| 55 | coil |
| 56 | shaft |
| 57 | rotor core |
| 57a | rotor core peripheral portion |
| 58 | magnet |
| Lm | axial direction length of magnet |
| Lr | axial direction length of rotor core |
| Ls | axial direction length of stator core |
| X1 | overhang amount of rotor core with respect to magnet |
| X2 | overhang amount of stator core with respect to rotor core |
| tr | thickness of rotor core plate |
| ts | thickness of stator core plate |

## Claims

1. A brushless motor, comprising:

a stator comprising a stator core formed of a magnetic material; and
a rotor which is rotatably arranged on an inner side of the stator, the rotor comprising a rotor core formed of a magnetic material and a plurality of magnets fixed in the rotor core,
the rotor core comprising:

a core body fixed to a rotor shaft; and
a plurality of magnet mounting portions which are arranged at regular intervals in a circumferential direction of the core body and in which the magnets are accommodated,

an axial direction length $Lr$ of the rotor core being longer than an axial direction length $Lm$ of the magnets ($Lr > Lm$), and
an axial direction length $Ls$ of the stator core being longer than the axial direction length $Lr$ of the rotor core ($Ls > Lr$).

**2.** A brushless motor according to claim 1,
wherein the rotor core has a first overhang portion formed on both end portions of the rotor core, the first overhang portion being free from facing the magnets and overhanging in an axial direction from end portions in the axial direction of the magnets, and
wherein the stator core has a second overhang portion formed on both end portions of the stator core, the second overhang portion being free from facing the rotor core and overhanging in an axial direction from end portions in an axial direction of the rotor core.

**3.** A brushless motor according to claim 1 or 2, wherein a length X1 in an axial direction of the first overhang portion and a length X2 in an axial direction of the second overhang portion are more than 0 mm to 1.0 mm or less.

**4.** A brushless motor according to claim 3, wherein the length X1 in the axial direction of the first overhang portion and the length X2 in the axial direction of the second overhang portion are equal (X1=X2).

**5.** A brushless motor according to any one of claims 1 to 4,
wherein the rotor core is formed by laminating a plurality of rotor core plates formed of a thin steel sheet, and
wherein the axial direction length Lr of the rotor core is longer than the axial direction length Lm of the magnets by a thickness tr of the rotor core plates multiplied by n, where n is a natural number (Lr=Lm+tr$\times$n).

**6.** A brushless motor according to claim 5,
wherein the stator core is formed by laminating a plurality of stator core plates formed of a thin steel sheet, and
wherein the axial direction length Ls of the stator core is longer than the axial direction length Lr of the rotor core by a thickness ts of the stator core plates multiplied by n, where n is a natural number (Ls=Lr+ts$\times$n).

**7.** A brushless motor according to claim 6, wherein the thickness tr of the rotor core plates and the thickness ts of the stator core plates are equal (tr=ts).

**8.** A brushless motor according to any one of claims 1 to 7, wherein the rotor core comprises a plurality of salient pole portions which are formed on an outer peripheral side of the magnet mounting portions and which are arranged on an outer peripheral portion of the rotor.

[Fig. 1]

[Fig. 2]

[Fig. 3]

[Fig. 4]

OUTPUT TORQUE

COGGING TORQUE

OVERHANG ON ONE SIDE (mm)
LAMINATED CORE PLATE THICKNESS 0.5 mm

[Fig. 5]

OUTPUT TORQUE

COGGING TORQUE

OVERHANG ON ONE SIDE (mm)
LAMINATED CORE PLATE THICKNESS 0.5 mm

[Fig. 6]

(a)

(b)

(c)

[Fig. 7]

## INTERNATIONAL SEARCH REPORT

| International application No. |
| --- |
| PCT/JP2014/070311 |

A. CLASSIFICATION OF SUBJECT MATTER
*H02K21/16*(2006.01)i

According to International Patent Classification (IPC) or to both national classification and IPC

B. FIELDS SEARCHED

Minimum documentation searched (classification system followed by classification symbols)
H02K21/16

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-194489 A  (Mitsuba Corp.), 08 July 2004 (08.07.2004), paragraphs [0013] to [0025]; fig. 1 to 5 & US 2004/0113506 A1    & DE 10357808 A1 | 1-8 |
| Y | JP 11-234931 A  (Hitachi, Ltd.), 27 August 1999 (27.08.1999), paragraphs [0022] to [0034]; fig. 1 to 6 (Family: none) | 1-8 |
| Y | JP 2010-051150 A  (Mitsuba Corp.), 04 March 2010 (04.03.2010), paragraph [0025]; fig. 7 (Family: none) | 3-8 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 October, 2014 (14.10.14) | 21 October, 2014 (21.10.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2014/070311 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-045873 A  (Fuji Electric Systems Co., Ltd.), 25 February 2010 (25.02.2010), paragraphs [0059] to [0062]; fig. 5 (Family: none) | 6-8 |
| Y | JP 2012-120326 A  (Fujitsu General Ltd.), 21 June 2012 (21.06.2012), paragraph [0016]; fig. 1 to 2 & US 2012/0133239 A1     & EP 2458711 A2 & CN 102487224 A          & AU 2011250871 A1 | 8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008160931 A

- JP 2010051150 A